# EUROPÄISCHE PATENTANMELDUNG

(11) **EP 0 548 896 A1**
(43) Veröffentlichungstag der Anmeldung: **30.06.1993**
(21) Anmeldenummer: 92121744.4
(22) Anmeldetag: 21.12.1992
(51) Int. Cl.: C08J 3/12, C09D 5/03

(54) **Bindemittel für Pulverlacke, Verfahren zur seiner Herstellung sowie dessen Verwendung zur Herstellung von Pulverlacken**

(30) Priorität: 23.12.1991 DE 4142881
(71) Anmelder: EMS-INVENTA AG, CH-8001 Zürich (CH)
(72) Erfinder: Reich, Albert, CH-7014 Trin (CH); Guggemos, Rudolf, CH-7013 Domat/Ems (CH); Kallen, Roland, CH-7013 Domat/Ems (CH)
(74) Vertreter: Müller-Boré & Partner Patentanwälte

(57) **Zusammenfassung**

Die Erfindung betrifft ein Bindemittel für Pulverlacke, dessen Granulat eine Korngrössenverteilung zwischen 0,001 bis 5,5 mm, bevorzugt 0,001 bis 4 mm besitzt, und insbesondere die Verwendung solcher Bindemittel zur Herstellung von Pulverlacken und einen in der Wärme vernetzbaren Pulverlack, der erfindungsgemässes Bindemittel, Pigmente und/oder Füllstoffe und Additive enthält. Die Erfindung betrifft auch ein Verfahren zur Herstellung dieses Bindemittels, in dem in einem ersten Schritt aus der Bindemittelschmelze mittels einer geeigneten Vorrichtung Pillen mit einem Durchmesser von 1 bis 8 mm und einer Dicke von 0,5 bis 4 mm geformt werden und in einem zweiten Schritt durch mechanische Zerkleinerung Bindemittelgranulat mit einer Korngrössenverteilung zwischen 0,001 bis 5,5 mm, bevorzugt 0,001 bis 4 mm, erhalten wird.

## Beschreibung

Die Erfindung betrifft den in den Patentansprüchen angegebenen Gegenstand. Die Erfindung betrifft insbesondere Bindemittel für Pulverlacke in Granulatform mit einer definierten und sehr engen Korngrössenverteilung. Die Erfindung betrifft ebenfalls die Verwendung solcher Bindemittel zur Herstellung von Pulverlacken und einen in der Wärme vernetzbaren Pulverlack, der ein solches Bindemittel enthält. Die Erfindung betrifft auch ein Verfahren zur Herstellung dieses Bindemittelgranulats sowie ein Verfahren zur Herstellung eines in der Wärme vernetzbaren Pulverlacks aus diesem Bindemittelgranulat.

Pulverlacke bestehen aus Bindemittel, Pigmenten und/oder Füllstoffen, sowie Additiven. Die auf dem Markt heute gebräuchlichsten in der Wärme vernetzbaren Pulverlacktypen enthalten als Bindemittel Polyurethan-, Epoxid-, Polyester-/Epoxid-, Polyester- oder Acrylatsysteme.

Polyurethansysteme bestehen aus hydroxyterminierten Polyestern und verkappten Isocyanaten. Epoxid-Pulverlacke enthalten Polyepoxidverbindungen bevorzugt auf Bisphenol-A-Basis und entsprechende Vernetzungsmittel. Polyester-/ Epoxid-Systeme bestehen aus carboxylterminierten Polyestern und Epoxidverbindungen, wobei bei den sogenannten Mischpulvern Epoxide auf Bisphenol-A-Basis und bei den sogenannten Polyesterpulvern Trisglycidylisocyanurat (TGIC) als Vernetzungsmittel verwendet werden. Polyesterpulver können anstelle TGIC auch Hydroxyalkylamide als Vernetzungsmittel enthalten. Beispielhaft sei hier Primid XL 552 der Firma Rohm und Haas genannt. Acrylat-Pulverlacke bestehen aus carboxyl-, glycidyl- oder hydroxylfunktionellen Acrylaten und geeigneten Vernetzungsmitteln.

Weiterhin können Pulverlacke aus hydroxyterminierten Polyestern und substituierten Melaminen oder substituierten Glykolurilen bestehen.

Die Pulverlackherstellung umfasst folgende Schritte: Zuerst werden die einzelnen Pulverlackkomponenten gemäss Rezeptur eingewogen und in einem Vormischaggregat gleichmässig zu einem sogenannten Premix vermischt. Hierfür verwendbare Vormischaggregate sind z.B. Taumelmischer oder Zwangsmischer. Die Vormischungsdauer beträgt je nach Art des Gerätes zwischen 1 bis 60 Minuten.

Anschliessend erfolgt die Herstellung des Pulverlacks durch Schmelzemischen in einem Extruder oberhalb des Schmelzbereichs des Bindemittels und unterhalb der Reaktionstemperatur des Vernetzungsmittels. Nach Abkühlen der Schmelze wird der Pulverlack gemahlen und anschliessend gesiebt.

Der fertige Pulverlack wird elektrostatisch oder triboelektrisch auf das zu beschichtende Gut appliziert.

Für die Qualität des Pulverlacks und damit für die Oberflächenbeschaffenheit des ausgehärteten Pulverlackfilms sind sowohl die Vormischung als auch die Dispergierung des sogenannten Premixes im Extruder von entscheidender Bedeutung.

Die Mischung der Einzelkomponenten im Vormischaggregat und die Dispergierung des sogenannten Premixes im Extruder ist umso gleichmässiger, je enger die mittleren Korndurchmesser der einzelnen Komponenten beieinander liegen.

Zur Verdeutlichung der unterschiedlichen Korndurchmesser der einzelnen Pulverlackkomponenten seien hier beispielhaft der mittlere Korndurchmesser von Pigmenten mit 0,5 µm bis ca. 10 µm und dazu als Vergleich der übliche Korndurchmesser von kommerziellen Bindemitteln, der bis zu 10 mm beträgt, genannt.

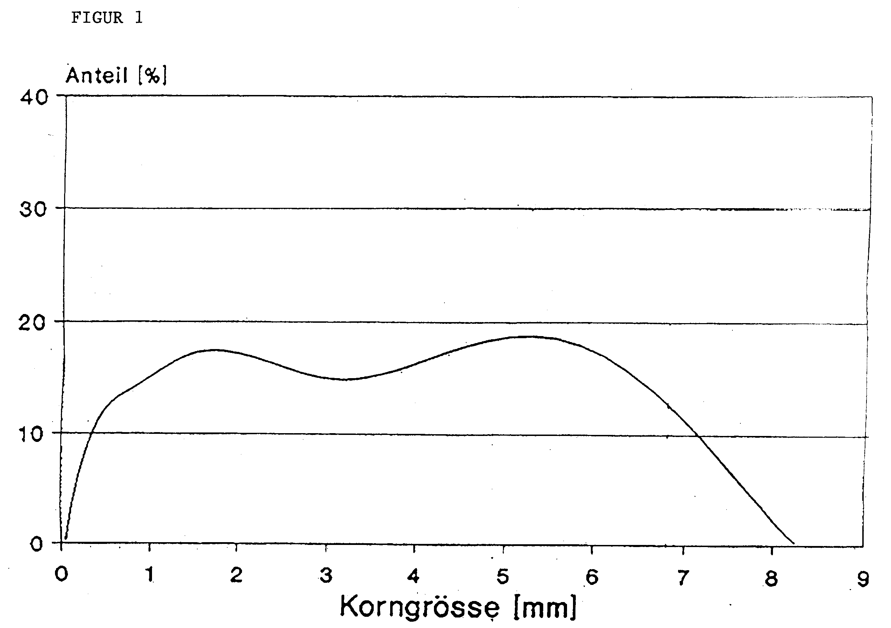

Gemäss Stand der Technik werden z.B. Bindemittelschuppen für die Herstellung eines Pulverlacks, der Polyesterharz im Bindemittel enthält, wie folgt hergestellt:
Geschmolzenes Harz fliesst aus dem Reaktorkessel über ein Filter auf ein wassergekühltes Kühlband. Nach dem Erstarren der Schmelze wird das Harz auf einem Brecher gebrochen. Die so hergestellten Bindemittelschuppen besitzen, wie aus Figur 1 ersichtlich, eine durchschnittliche Korngrössenverteilung zwischen 0,001 mm und 8,3 mm.

Pulverlacke mit solchen gemäss dem Stand der Technik hergestellten Bindemittelschuppen zeigen eine schlechte Vermischung des sogenannten Premixes sowie eine schlechte Dispergierung beim Schmelzemischen im Extruder, das zu einer schlechten Oberflächenbeschaffenheit des daraus hergestellten Pulverlackfilms führt.

Es war daher Aufgabe der Erfindung, ein Bindemittelgranulat bereit zu stellen, dass ein optimales sogenanntes Premix ergibt und eine gleichmässige Dispergierung beim Schmelzemischen im Extruder gewährleistet sowie ein Verfahren zur Herstellung dieses Bindemittels, seine Verwendung zur Herstellung von Pulverlacken als auch ein in der Wärme vernetzbarer Pulverlack, der dieses Bindemittel enthält sowie ein Verfahren zur Herstellung dieses Pulverlacks.

Diese Aufgabe wird gelöst durch das Bindemittel mit den Merkmalen des Anspruchs 1, durch das Verfahren zu seiner Herstellung mit den Merkmalen des Anspruchs 7, seine Verwendung zur Herstellung von Pulverlacken gemäss Anspruch 12 sowie ein in der Wärme vernetzbarer Pulverlack gemäss Anspruch 9, der dieses Bindemittel enthält, als auch ein Verfahren zu seiner Herstellung mit den kennzeichnenden Merkmalen des Anspruchs 10.

Es wurde festgestellt, dass überraschenderweise ein Bindemittel, dessen Granulat eine ganz bestimmte Korngrössenverteilung aufweist, die gestellte Aufgabe löst.

Ein sogenanntes Premix, welches das erfindungsgemässe Bindemittel enthält, zeigt zudem ein ausgezeichnetes Fliess- und Einzugsverhalten in den Extruder bzw. Cokneter. Im Extruder oder Cokneter selbst ist weiterhin aufgrund der guten Vormischung, welche durch die erfindungsgemässe Korngrössenverteilung des Bindemittelgranulats erzielt wird, die Voraussetzung für ein optimales Dispergieren der Komponenten gegeben, was besonders auch bei der Verwendung von schwierig benetzbaren organischen Pigmenten von grossem Vorteil ist. Ein weiterer Vorteil des erfindungsgemässen Granulats besteht darin, das in bestimmten Dispergiervorrichtungen, wie z.B. in Coknetern, unter Beibehaltung der guten Dispergiereigenschaften eine Durchsatzerhöhung von bis zu 70%, verglichen mit dem Stand der Technik, erzielt wird.

Weiterhin lassen sich durch die erfindungsgemässe Lieferform auch wesentliche Vorteile bei der Herstellung von transparenten Pulverlacken erzielen.

Beim erfindungsgemässen Verfahren zur Herstellung des erfindungsgemässen Bindemittels werden aus der Schmelze mittels einer entsprechenden Vorrichtung zunächst in einem ersten Schritt Pillen mit einem Durchmesser von 1 bis 8 mm und einer Dicke von 0,5 bis 4 mm hergestellt, welche nach dem Abkühlen in einem zweiten Schritt mechanisch zerkleinert werden.
Zur Herstellung dieser Pillen im ersten Schritt werden Pastillieranlagen eingesetzt. Die anschliessende mechanische Zerkleinerung der Pillen erfolgt mit einem geeigneten Brecher.

Das erfindungsgemässe Bindemittelgranulat besitzt nicht nur eine engere, sondern auch eine vollkommen andere Korngrössenverteilung als Bindemittelschuppen gemäss dem Stand der Technik.

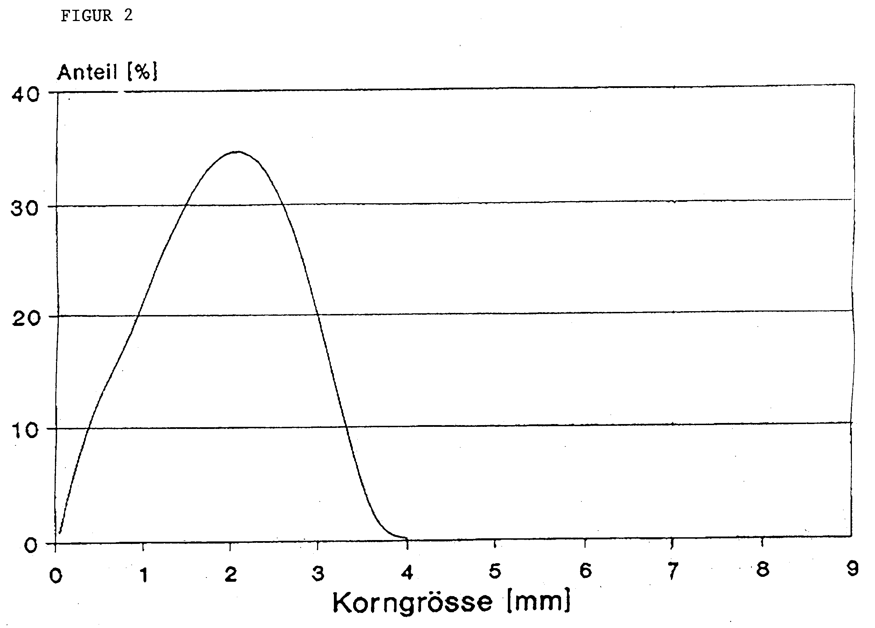

Figur 2 zeigt eine solche erfindungsgemässe Korngrössenverteilung eines Bindemittelpolyestergranulats, das nach dem erfindungsgemässen Verfahren hergestellt ist.

Figur 1 zeigt zum Vergleich die Korngrössenverteilung von Schuppen eines Bindemittelpolyesters, die nach dem Stand der Technik hergestellt sind.

Ein weiterer Vorteil der Erfindung ist, dass durch die engere Korngrössenverteilung und der kleineren mittleren Korndurchmesser, die erfindungsgemässen Bindemittel bei demselben Anteil an Feinstaub wie Bindemittel gemäss dem Stand der Technik eine geringere Staubentwicklung zeigen. Der Grund hierfür liegt in der Adsorption der feinen Staubteilchen an den Restteilchen, die im Gegensatz zu den Bindemittelschuppen gemäss dem Stand der Technik eine wesentlich grössere Oberfläche besitzen.

Pulverlack-Rezepturen, welche erfindungsgemässe Bindemittel enthalten, zeigen verbesserte Verarbeitungseigenschaften bei der Herstellung des Pulverlacks und ein damit hergestellter Lackfilm zeigt ein verbessertes Oberflächenaussehen mit wesentlich verbessertem Verlauf.

Das erfindungsgemässe Bindemittelgranulat für Pulverlacke besitzt eine Korngrössenverteilung von 0,001 bis 5,5 mm, bevorzugt 0,001 bis 4 mm. Das erfindungsgemässe Bindemittel enthält bevorzugt Polyester-, Epoxid-, Acrylat- oder Polyester-/Expoidharze.

Das erfindungsgemässe Verfahren zur Herstellung des erfindungsgemässen Bindemittelgranulats umfasst zwei Stufen. In einem ersten Schritt werden aus der Bindemittelschmelze mittels einer geeigneten Vorrichtung Pillen mit einem Durchmesser von 1 bis 8 mm und einer Dicke von 0,5 bis 4 mm geformt. Nach dem Abkühlen werden diese in einem zweiten Schritt mechanisch zerkleinert. Danach besitzen die Bindemittelpillen die erfindungsgemässe Korngrössenverteilung.

Die erfindungsgemässen Bindemittel werden zur Herstellung von Pulverlacken verwendet.

Ein erfindungsgemässer in der Wärme vernetzbarer Pulverlack besteht aus Bindemittel, Pigmenten und/oder Füllstoffen und Additiven, wobei das Bindemittel in Form von Granulat eingesetzt wird, das die erfindungsgemässe Korngrössenverteilung zwischen 0,001 und 5,5 mm, bevorzugt 0,001 und 4,0 mm aufweist.

Beim erfindungsgemässen Verfahren zur Herstellung des erfindungsgemässen Pulverlacks werden in einem ersten Schritt aus der Bindemittelschmelze mittels einer geeigneten Vorrichtung Bindemittelpillen mit einem Durchmesser von 1 bis 8 mm und einer Dicke von 0,5 bis 4 mm geformt, diese werden in einem zweiten Schritt nach dem Abkühlen mechanisch zerkleinert, so dass sie eine Korngrössenverteilung zwischen 0,001 und 5,5 mm, bevorzugt 0,001 und 4 mm, aufweisen, dann wird dieses Granulat in einem dritten Schritt zusammen mit Pigmenten und/oder Füllstoffen und Additiven zu einem sogenannten Premix vermischt, welches in einem Extruder in der Schmelze zu einem Pulverlack verarbeitet wird, der in weiteren Schritten extrudiert, abgekühlt, gebrochen, gemahlen und gesiebt wird.

Die folgenden Beispiel erläutern die Erfindung, ohne sie darauf zu beschränken.

In den Vergleichsbeispielen und Beispielen wurden folgende Markenprodukte verwendet:
- Grilesta V 73-15:
   carboxylhaltiger Polyester der Fa. EMS-CHEMIE AG, Lieferform Schuppen mit einer Korngrössenverteilung von 0,001 bis 8,3 mm (siehe Figur 1)
   Erweichungspunkt: 80 bis 90°C
   Säurezahl: ca. 33 mg KOH/g
   Schmelzviskosität: 20 bis 35 Pa.s/160°C
- Grilesta V 76-12:
   carboxylhaltiger Polyester der Fa. EMS-CHEMIE AG, Lieferform Schuppen mit einer Korngrössenverteilung von 0,001 bis 8,3
   Erweichungspunkt: 80 bis 90°C
   Säurezahl: ca. 34 mg KOH/g
   Schmelzviskosität: ca. 38 Pa.s/160°C
- Grilesta P 7401:
   carboxylhaltiger Polyester der Fa. EMS-CHEMIE AG, Lieferform Schuppen mit einer Korngrössenverteilung von 0,001 bis 8,3
   Erweichungspunkt: 80 bis 90°C
   Säurezahl: 30 bis 40 mg KOH/g
   Schmelzviskosität: 25 bis 45 Pa.s/160°C
- Grilonit H 88071:
   modifiziertes Dicyandiamid der Fa. EMS-CHEMIE AG
   Schmelzpunkt: 165°C
- Grilonit L 1203.5:
   Epoxidharz der Fa. EMS-CHEMIE AG, Lieferform Schuppen mit einer Korngrössenverteilung von 0,001 bis 8,3
   Epoxidäquivalentgewicht: 715 bis 835
- Grilonit L 1204.1:
   Epoxidharz der Fa. EMS-CHEMIE AG, Lieferform Schuppen mit einer Korngrössenverteilung von 0,001 bis 8,3
   Epoxidäquivalentgewicht: 850 bis 1000
- Primid XL 552:
   Hydroxyalkylamid der Fa. ROHM und HAAS
   Hydroxyläquivalentgewicht: 82 bis 86
- Araldit PT 810 :
   Trisglycidylisocyanurat der Fa. CIBA-GEIGY AG
- Kronos 2160:
   Titandioxid des Rutiltyps der Fa. KRONOS TITAN GmbH
- Resiflow PV 88:
   Verlaufmittel der Fa. WORLEE

### A. Herstellung der erfindungsgemässen Bindemittelgranulate

### Beispiel I

Aus der Schmelze eines carboxylhaltigen Polyesters wurden mittels einer Pastilliervorrichtung Pillen mit einem Durchmesser von 1 bis 8 mm und einer Dicke von 0,5 bis 4 mm hergestellt. Diese wurden nach dem Abkühlen in einem zweiten Schritt auf einem Brecher mechanisch zerkleinert. Dieses erfindungsgemässe Bindemittelpolyestergranulat besitzt eine Korngrössenverteilung zwischen 0,001 und 4 mm (siehe Figur 2). Hierbei wurde die Korngrössenverteilung wie folgt bestimmt:
In abnehmender Reihenfolge, bezogen auf die Maschenweite, wurden Siebe der Maschenweite 110 µm, 200 µm, 400 µm, 1200 µm und 2000 µm aufeinandergestellt, so dass das oberste Sieb die grösste und das unterste Sieb die kleinste Maschenweite besitzen. Dann wurden 100 g der Probe auf die Oberfläche des obersten Siebes aufgetragen. Ein Rüttelautomat wurde genau 2 Minuten laufen gelassen. Anschliessend wurden die Anteile der verschiedenen Fraktionen gewogen und als Prozent der Gesamtmenge angegeben.

### Beispiel II

Aus der Schmelze eines Epoxidharzes wurden mittels einer Pastillieranlage Pillen mit einem Durchmesser von 1 bis 8 mm und einer Dicke von 0,5 bis 4 mm hergestellt. Diese wurden nach dem Abkühlen in einem zweiten Schritt auf einem Brecher mechanisch zerkleinert. Dieses erfindungsgemässe Bindemittelepoxidgranulat besitzt eine Korngrössenverteilung zwischen 0,001 und 4 mm. Hierbei wurde die Korngrössenverteilung wie folgt bestimmt:
In abnehmender Reihenfolge, bezogen auf die Maschenweite, wurden Siebe der Maschenweite 110 µm, 200 µm, 400 µm, 1200 und 2000 µm aufeinandergestellt, so dass das oberste Sieb die grösste und das unterste Sieb die kleinste Maschenweite besitzen. Dann wurden 100 g der Probe auf die Oberfläche des obersten Siebes aufgetragen. Ein Rüttelautomat wurde genau 2 Minuten laufen gelassen. Anschliessend wurden die Anteile der verschiedenen Fraktionen gewogen und als Prozent der Gesamtmenge angegeben.

### B. Herstellung von Pulverlacken

### Vergleichsbeispiel 1 (Pulverlack gemäss Stand der Technik)

In einem Mixaco-Mischer (Mischzeit: 3 min; Geschwindigkeit: 5 m/s) wurde aus
456 Gew.-Teilen Grilesta V 73-15 (Schuppen)
41 Gew.-Teilen Araldit PT 810
400 Gew.-Teilen Kronos 2160
8 Gew.-Teilen Resiflow PV 88
5 Gew.-Teilen Benzoin
ein sogenannter Premix hergestellt. Hieraus wurde anschliessend ein Pulverlack in einem Buss Cokneter PLK 46 durch Extrusion hergestellt: Zone 1: 80°C; Zone 2: 80°C; Welle 10° C; Geschwindigkeit 75 U/min.
Das extrudierte Gemisch wurde auf einem wassergekühlten Kühlband abgekühlt und danach auf einem Brecher gebrochen, dann gemahlen (Micropul Bantam SH) und gesiebt (< 100 µm). Die Applikation des Pulverlacks erfolgte triboelektrisch oder elektrostatisch.

Die erhaltenen Pulverlackoberflächen zeigen einen mässigen Verlauf (Stufe 3 nach einer internen Bewertungsscala von 1 bis 5, wobei der beste Verlauf Stufe 1 entspricht) sowie Krater und pinholes. Akzeptable Lackoberflächen erhält man mit diesem Pulverlack nur mittels schwieriger Optimierung der Extrusionsbedingungen.

### Beispiel 2 (erfindungsgemässer Pulverlack)

Wie im Vergleichsbeispiel 1, beschrieben wird ein Pulverlack aus
456 Gew.-Teilen Bindemittelgranulat hergestellt nach Bei
spiel I vom Polyester des Beispiels 1 41 Gew.-Teilen Araldit PT 810
400 Gew.-Teilen Kronos 2160
8 Gew.-Teilen Resiflow PV 88
5 Gew.-Teilen Benzoin
hergestellt, wobei das Bindemittelgranulat in einer erfindungsgemässen Korngrössenverteilung von 0,001 bis 4 mm eingesetzt wurde.

Im Gegensatz zum Vergleichsbeispiel 1 zeigte das sogenannte Premix ein besseres Fliessverhalten. Dies machte sich vor allem am besseren Einzug in den Extruder und an der Durchsatzerhöhung in manchen Extrudern, insbesondere Coknetern, unter Beibehaltung der guten Dispergiereigenschaften bemerkbar. Die mit diesem erfindungsgemässen Pulverlack hergestellten Lackfilme zeigen keinerlei Oberflächendefekte und einen wesentlich verbesserten Verlauf (Stufe 1).

### Vergleichsbeispiel 3 (Pulverlack gemäss Stand der Technik)

In einem Mixaco-Mischer (Mischzeit: 3 min; Geschwindigkeit: 5 m/s) wurde aus
560 Gew.-Teilen Grilesta V 76-12 (Schuppen)
30 Gew.-Teilen Primid XL 552
400 Gew.-Teilen Kronos 2160
8 Gew.-Teilen Resiflow PV 88
5 Gew.-Teilen Benzoin
ein sogenannter Premix hergestellt. Hieraus wurde anschliessend ein Pulverlack in einem Buss-Cokneter PLK 46 durch Extrusion hergestellt: Zone 1: 80°C; Zone 2: 80°C; Welle 10°C; Geschwindigkeit 75 U/min.

Das extrudierte Gemisch wurde auf einem wassergekühlten Kühlband abgekühlt und danach auf einem Brecher gebrochen, dann gemahlen (Micropul Bantam SH) und gesiebt (< 100 µm). Die Applikation des Pulverlacks erfolgte triboelektrisch oder elektrostatisch.

Die erhaltenen Pulverlackoberflächen zeigen einen mässigen Verlauf (Stufe 3 nach einer internen Bewertungsscala von 1 bis 5, wobei der beste Verlauf Stufe 1 entspricht) sowie Krater und pinholes.

### Beispiel 4 (erfindungsgemässer Pulverlack)

Wie im Vergleichsbeispiel 3, beschrieben wird ein Pulverlack aus
560 Gew.-Teilen Bindemittelgranulat hergestellt nach Beispiel I vom Polyester des Beispiels 3
30 Gew.-Teilen Primid XL 552
400 Gew.-Teilen Kronos 2160
8 Gew.-Teilen Resiflow PV 88
5 Gew.-Teilen Benzoin
hergestellt, wobei das Bindemittelgranulat in einer erfindungsgemässen Korngrössenverteilung von 0,001 bis 4 mm eingesetzt wurde.

Im Gegensatz zum Vergleichsbeispiel 3 zeigte das sogenannte Premix ein besseres Fliessverhalten. Dies machte sich vor allem am besseren Einzug in den Extruder und an der Durchsatzerhöhung in manchen Extrudern, insbesondere Buss Coknetern, unter Beibehaltung der guten Dispergiereigenschaften, bemerkbar.

Die mit diesem erfindungsgemässen Pulverlack hergestellten Lackfilme zeigen keinerlei Oberflächendefekte und einen wesentlich verbesserten Verlauf (Stufe 2).

### Vergleichsbeispiel 5 (Pulverlack gemäss Stand der Technik)

In einem Mixaco-Mischer (Mischzeit: 3 min; Geschwindigkeit: 5 m/s) wurde aus
411 Gew.-Teilen Grilesta P 7401 (Schuppen)
176 Gew.-Teilen Grilonit L 1203.5 (Schuppen)
400 Gew.-Teilen Kronos 2160
8 Gew.-Teilen Resiflow PV 88
5 Gew.-Teilen Benzoin
ein sogenannter Premix hergestellt. Hieraus wurde anschliessend ein Pulverlack in einem Buss Cokneter PLK 46 durch Extrusion hergestellt: Zone 1: 80°C; Zone 2: 80°C; Welle 10°C; Geschwindigkeit 75 U/min.

Das extrudierte Gemisch wurde auf einem wassergekühlten Kühlband abgekühlt und danach auf einem Brecher gebrochen, dann gemahlen (Micropul Bantam SH) und gesiebt (< 100 µm). Die Applikation des Pulverlacks erfolgte triboelektrisch oder elektrostatisch.

Die erhaltenen Pulverlackoberflächen zeigen zwar einen guten Verlauf (Stufe 2), besitzen aber Krater und pinholes.

### Beispiel 6 (erfindungsgemässer Pulverlack)

Wie im Vergleichsbeispiel 5 beschrieben wird ein Pulverlack aus
411 Gew.-Teilen Bindemittelgranulat, hergestellt nach Beispiel I vom Polyester des Beispiels 5
176 Gew.-Teilen Grilonit L 1203.5, hergestellt nach Beispiel II
400 Gew.-Teilen Kronos 2160
8 Gew.-Teilen Resiflow PV 88
5 Gew.-Teilen Benzoin
hergestellt, wobei das Bindemittelgranulat aus Polyesterharz und Epoxidharz (Grilonit L 1203.5) in einer erfindungsgemässen Korngrössenverteilung von 0,001 bis 4 mm eingesetzt wurde.

Im Gegensatz zum Vergleichsbeispiel 5 zeigte das sogenannte Premix ein besseres Fliessverhalten. Dies machte sich vor allem am besseren Einzug in den Extruder und an der Durchsatzerhöhung in manchen Extrudern, insbesondere Coknetern, unter Beibehaltung der guten Dispergiereigenschaften, bemerkbar.

Die mit diesem erfindungsgemässen Pulverlack hergestellten Lackfilme zeigen keinerlei Oberflächendefekte und einen wesentlich verbesserten Verlauf (Stufe 1).

### Vergleichsbeispiel 7 (Pulverlack gemäss Stand der Technik)

In einem Mixacomischer (Mischzeit: 3 min; Geschwindigkeit: 5 m/s) wurde aus
556 Gew.-Teilen Grilonit L 1204.1 (Schuppen)
31 Gew.-Teilen Grilonit H 88071
400 Gew.-Teilen Kronos 2160
8 Gew.-Teilen Resiflow PV 88
5 Gew.-Teilen Benzoin
ein sogenannter Premix hergestellt. Hieraus wurde anschliessend ein Pulverlack in einem Buss Cokneter PLK 46 durch Extrusion hergestellt: Zone 1: 80°C; Zone 2: 80°C; Welle 10°C; Geschwindigkeit 75 U/min.

Das extrudierte Gemisch wurde auf einem wassergekühlten Kühlband abgekühlt und danach auf einem Brecher gebrochen, dann gemahlen (Micropul Bantam SH) und gesiebt (< 100 µm). Die Applikation des Pulverlacks erfolgte triboelektrisch oder elektrostatisch.

Die erahltenen Pulverlackoberflächen zeigen zwar einen guten Verlauf (Stufe 2 nach einer internen Bewertungsscala von 1 bis 5, wobei der beste Verlauf Stufe 1 entspricht), besitzen aber Krater und pinholes.

### Beispiel 8 (erfindungsgemässer Pulverlack)

Wie im Vergleichsbeispiel beschrieben, wird ein Pulverlack aus
556 Gew.-Teilen Bindemittelgranulat, hergestellt nach Beispiel II vom Epoxidharz des Beispiels 7
31 Gew.-Teilen Grilonit H 88071
400 Gew.-Teilen Kronos 2160
8 Gew.-Teilen Resiflow PV 88
5 Gew.-Teilen Benzoin
hergestellt, wobei das Bindemittelepoxidharzgranulat in einer erfindungsgemässen Korngrössenverteilung von 0,001 bis 4 mm eingesetzt wurde.

Im Gegensatz zum Vergleichsbeispiel 7 zeigte das sogenannte Premix ein besseres Fliessverhalten. Dies machte sich vor allem am besseren Einzug in den Extruder und an der Durchsatzerhöhung in manchen Extrudern, insbesondere in Coknetern, unter Beibehaltung der guten Dispergiereigenschaften, bemerkbar.

Die mit diesem erfindungsgemässen Pulverlack hergestellten Lackfilme zeigen keinerlei Oberflächendefekte und einen wesentlich verbesserten Verlauf (Stufe 1).

## Patentansprüche

1. Bindemittel für Pulverlacke, dadurch gekennzeichnet, dass das Bindemittel ein Granulat mit einer Korngrössenverteilung zwischen 0,001 und 5,5 mm ist.

2. Bindemittel gemäss Anspruch 1, dadurch gekennzeichnet, dass das Bindemittelgranulat eine Korngrössenverteilung zwischen 0,001 bis 4 mm besitzt.

3. Bindemittel gemäss den Ansprüchen 1 und 2, dadurch gekennzeichnet, dass es ein Polyesterharz enthält.

4. Bindemittel gemäss den Ansprüchen 1 und 2, dadurch gekennzeichnet, dass es ein Epoxidharz enthält.

5. Bindemittel gemäss den Ansprüchen 1 und 2, dadurch gekennzeichnet, dass es ein Acrylatharz enthält.

6. Bindemittel gemäss den Ansprüchen 1 und 2, dadurch gekennzeichnet, dass es ein Polyester- und ein Epoxidharz enthält.

7. Verfahren zur Herstellung von Bindemittelgranulat gemäss Anspruch 1, dadurch gekennzeichnet, dass in einem ersten Schritt aus der Bindemittelschmelze mittels einer geeigneten Vorrichtung Bindemittelpillen mit einem Durchmesser von 1 bis 8 mm und einer Dicke von 0,5 bis 4 mm geformt werden, welche in einem zweiten Schritt nach dem Abkühlen mechanisch zerkleinert werden, so dass das resultierende Granulat eine Korngrössenverteilung zwischen 0,001 und 5,5 mm aufweist.

8. Verfahren gemäss Anspruch 7, dadurch gekennzeichnet, dass die Bindemittelpillen in einem zweiten Schritt mechanisch zerkleinert werden, so dass das resultierende Granulat eine Korngrössenverteilung zwischen 0,001 und 4 mm aufweist.

9. In der Wärme vernetzbarer Pulverlack aus Bindemittel, Pigmenten und/oder Füllstoffen und Additiven, dadurch gekennzeichnet, dass er ein Bindemittel gemäss einem der Ansprüche 1 bis 6 enthält.

10. Verfahren zur Herstellung von Pulverlacken gemäss Anspruch 9, dadurch gekennzeichnet, dass in einem ersten Schritt aus einer Bindemittelschmelze mittels einer geeigneten Vorrichtung Bindemittelpillen mit einem Durchmesser von 1 bis 8 mm und einer Dicke von 0,5 bis 4 mm geformt werden, diese in einem zweiten Schritt nach dem Abkühlen mechanisch zerkleinert werden, so dass das resultierende Granulat eine Korngrössenverteilung zwischen 0,001 und 5,5 mm aufweist und dieses Granulat in einem dritten Schritt zusammen mit Pigmenten und/oder Füllstoffen und Additiven zu einem sogenannten Premix vermischt wird, welcher in der Schmelze zu einem Pulverlack verarbeitet wird, der in weiteren Schritten extrudiert, abgekühlt, gebrochen, gemahlen und gesiebt wird.

11. Verfahren gemäss Anspruch 10, dadurch gekennzeichnet, dass die Bindemittelpillen in einem zweiten Schritt mechanisch zerkleinert werden, so dass das resultierende Granulat eine Korngrössenverteilung zwischen 0,001 und 4 mm aufweist.

12. Verwendung von Bindemitteln gemäss einem der Ansprüche 1 bis 6 zur Herstellung von Pulverlacken.
